(19) Europäisches Patentamt
European Patent Office
Office européen des brevets

(11) **EP 1 565 329 B1**

(12) **FASCICULE DE BREVET EUROPEEN**

(45) Date de publication et mention
de la délivrance du brevet:
**16.04.2008 Bulletin 2008/16**

(21) Numéro de dépôt: **03758080.0**

(22) Date de dépôt: **29.10.2003**

(51) Int Cl.:
***B60C 15/00*** *(2006.01)*

(86) Numéro de dépôt international:
**PCT/EP2003/011992**

(87) Numéro de publication internationale:
**WO 2004/045873 (03.06.2004 Gazette 2004/23)**

(54) **PNEUMATIQUE A MOBILITE ETENDUE AVEC ZONE D'ANCRAGE A SENSIBLEMENT BAS MODULE**

NOTLAUFREIFEN MIT NIEDRIGEM MODUL-VERANKERUNGSBEREICH

TYRE WITH EXTENDED MOBILITY WITH SUBSTANTIALLY LOW-MODULUS ANCHORING ZONE

(84) Etats contractants désignés:
**AT BE BG CH CY CZ DE DK EE ES FI FR GB GR HU IE IT LI LU MC NL PT RO SE SI SK TR**

(30) Priorité: **18.11.2002 FR 0214483**

(43) Date de publication de la demande:
**24.08.2005 Bulletin 2005/34**

(73) Titulaires:
• **Société de Technologie Michelin
63000 Clermont-Ferrand (FR)**
• **Michelin Recherche et Technique S.A.
1763 Granges-Paccot (CH)**

(72) Inventeurs:
• **GUERINON, Bernard
F-63100 Clermont-Ferrand (FR)**
• **DRIEUX, Jean-Jacques
F-63530 Volvic (FR)**
• **ANDERSON, James, Robert
Simpsonville, SC 29681 (US)**
• **JARDINE, David
F-63000 Clermont-Ferrand (FR)**

(74) Mandataire: **Dequire, Philippe Jean-Marie Denis
M.F.P. Michelin,
SGD/LG/PI-F35-Ladoux
63040 Clermont-Ferrand Cedex 09 (FR)**

(56) Documents cités:
**WO-A-01/39999          WO-A-99/64225**

## Description

La présente invention concerne un pneumatique pour roue de véhicule dans lequel au moins un des bourrelets comporte un siège avec une génératrice dont l'extrémité axialement intérieure est sur un cercle de diamètre supérieur au diamètre du cercle sur lequel se trouve l'extrémité axialement extérieure. Ce type de conception est particulièrement adapté aux nouvelles générations de pneumatiques pouvant être utilisés, dans certaines limites, dans des conditions de faible pression, voire de pression nulle ou quasi-nulle, avec une élimination du risque de désolidarisation du pneu de la jante sur laquelle il est monté. Ce concept est souvent désigné par l'expression "mobilité étendue".

Depuis longtemps les fabricants de pneumatiques tentent de mettre au point un pneumatique ne créant aucune source de risque ou de danger potentiel lors d'un abaissement anormal, voire d'une perte totale de pression. Une des difficultés rencontrées concerne le roulage à plat ou à très faible pression. En effet, lors d'un roulage à très faible pression, voire à pression nulle avec des pneumatiques classiques, les bourrelets risquent fortement de se désolidariser du pourtour de la jante contre lequel ils étaient maintenus par la pression.

De nombreuses solutions ont été testées afin de pallier ces inconvénients. Souvent ces solutions engendrent des difficultés supplémentaires au niveau du montage et du démontage du pneu sur la jante.

Par ailleurs, la fonction serrage du pneumatique sur la jante est une fonction essentielle pour assurer les qualités du pneumatique en fonctionnement. En effet, elle agit directement ou indirectement sur de multiples aspects tels le montage (parfois désigné « clipsage ») ou fixation du pneumatique, l'étanchéité du pneumatique, la rotation sur jante, etc. Ces fonctions sont toutes importantes et nécessitent des caractéristiques spécifiques et une fabrication rigoureuse des produits, en particulier si des standards de qualité élevés sont recherchés. Hors, les jantes et les pneumatiques ont souvent, pour un même code dimensionel, des dimensions réelles légèrement différentes, principalement dues aux tolérances de fabrication. Ces variations de dimensions compliquent le respect des différentes fonctions préalablement énumérées.

Pour remplir ces fonctions, on utilise industriellement deux grands types de solutions. Tout d'abord, pour les pneumatiques traditionnels, la tringle assure simultanément toutes ces fonctions.

Plus récemment, pour plusieurs types de produits manufacturés par la demanderesse, la tringle classique est remplacée par une zone d'ancrage comportant notamment des arrangements de fils circonférentiels coopérant avec la structure de renfort de type carcasse via un mélange d'ancrage ou de liaison. Là encore, la zone d'ancrage assure toutes les fonctions présentées ci-dessus.

Dans ces deux cas, il est toutefois difficile d'optimiser certains paramètres, car très souvent, l'amélioration de l'un, se fait au détriment d'un autre. Ce jeu de compromis entre gain d'un côté et pénalisation d'un autre, comporte donc certaines limites, puisqu'il est souvent difficile de tolérer de moins bonnes performances pour certains aspects.

Le document EP 0 582 196 présente un pneumatique comportant une bande de roulement prolongée par deux flancs et deux bourrelets ainsi qu'une carcasse ancrée dans les deux bourrelets à un renforcement annulaire. La carcasse est constituée de fils disposés de façon adjacente, alignés circonférentiellement et en contact avec au moins une couche de gomme de liaison de très haut module d'élasticité dans la zone d'accrochage du bourrelet comprenant le renforcement annulaire. Dans ce pneumatique, le renforcement annulaire de la zone d'accrochage du bourrelet est constitué de piles de fils circonférentiels avec interposition entre les fils de renforcement de la carcasse et ces piles d'une couche de gomme de liaison de très haut module d'élasticité. Ce mode de réalisation est destiné aux pneumatiques de type classique, avec maintien des bourrelets contre le crochet de jante dû à la pression de gonflage du pneumatique. On retrouve dans ce type d'agencement une prédominance d'efforts de type latéral ou axial, induisant d'importantes forces de compression agissant sensiblement axialement depuis les parois vers le centre dudit bourrelet. Ces forces augmentent en fonction de la pression de gonflage. L'augmentation de la pression tend à faire glisser le bourrelet contre le crochet, radialement vers l'extérieur. Les efforts induits radialement vers l'intérieur, contre le siège de la jante , diminuent avec l'augmentation de la pression, ou avec toute augmentation de la tension de la structure de renfort de type carcasse.

On remarque par ailleurs que les piles de fils sont alignées dans un sens sensiblement parallèle à l'orientation du profil du crochet de jante contre lequel le bourrelet s'appuie. Le profil du bourrelet de ce type de pneumatique est relativement étroit et allongé; l'ancrage est réparti sur l'essentiel de la hauteur et de la largeur du bourrelet. Le passage de la carcasse dans le bourrelet est généralement sensiblement central par rapport aux parois dudit bourrelet. Par ailleurs, s'agissant d'un bourrelet relativement étroit sujet à des efforts à prédominance axiale, ni la pression de gonflage, ni la tension induite dans la carcasse ne permettent la génération d'important moments ou couples, tendant à faire pivoter ou tourner le bourrelet sur lui-même.

Avec un tel type de pneumatique, si la pression chute et que le roulage se poursuit, le maintien du pneumatique sur la jante n'est plus assuré, et dans la plupart des cas, il se produit un déjantage.

Le document EP 0 673 324 décrit un ensemble roulant comprenant au moins un pneumatique à armature de carcasse radiale ancrée dans chaque bourrelet et une jante de conformation particulière. Cette jante comporte un premier siège avec une génératrice telle que l'extrémité axialement extérieure de ladite génératrice est distante de l'axe de rotation d'une longueur inférieure à la distance séparant son extrémité axialement intérieure et est délimitée axialement à l'extérieur par une saillie ou rebord de jante. Le pneumatique comporte des sièges de bourrelets adaptés pour un montage sur cette jante. Le type d'interface pneumatique/jante proposé dans ce document présente de nombreux avantages par rapport aux solutions déjà connues, notamment au niveau de la facilité de montage/démontage tout en permettant d'effectuer un certain parcours malgré une chute de pression.

Le document EP 0 748 287 décrit une solution permettant une première optimisation de la technologie de base décrite dans le document EP 0 673 324 préalablement cité. Il s'agit d'un pneumatique dont au moins un bourrelet a une structure permettant de modifier le serrage dudit bourrelet en fonction de la tension de l'armature de carcasse et notamment un renforcement de celui-ci lorsque la pression de gonflage s'accroît jusqu'à sa valeur nominale. Le document propose ainsi l'utilisation d'un bourrelet avec ancrage de l'extrémité de la carcasse par retournement de celle-ci autour de la base de la tringle, par les cotés axialement et radialement intérieurs par rapport à la tringle. Le bourrelet comporte également, adjacent à la tringle et axialement à l'extérieur de celle-ci, un profilé de mélange caoutchouteux de dureté relativement élevée contre lequel la tringle peut venir exercer une force de compression lors d'un accroissement de tension de l'armature de carcasse. Cette force de compression crée un auto-serrage de la pointe du bourrelet sur la jante de montage. La tension de la carcasse entraîne donc un déplacement de la tringle vers l'extérieur, afin que cette dernière génère ladite force de compression. Dans une telle configuration, la présence d'une tringle de type classique et le retournement de la carcasse sous cette dernière sont présentés comme étant indispensables pour générer la force de compression. Ceci limite les possibilités d'envisager d'autres types d'agencement.

D'autre part, le document EP 0 922 592, décrit deux modes de réalisations avec ancrage de la carcasse par retournement de celle-ci axialement vers l'extérieur. Le premier mode propose un ancrage de la carcasse dans le bourrelet par retournement radialement vers l'extérieur de l'extrémité de la carcasse. Le retournement est entouré de part et d'autre par deux couches radialement superposées de fils métalliques disposés axialement côte à côte et couvrant sensiblement toute la portion axiale le long du siège du bourrelet. Les couches sont agencées de façon à être parallèles au siège. Les types de fils ainsi que les dimensions correspondantes sont très précises. La seconde solution proposée dans ce document concerne des sièges de bourrelets avec des diamètres différents. L'arrimage de la carcasse s'effectue également de façon différente par rapport à la première solution. Tout d'abord, la carcasse se subdivise en deux portions radialement séparées au niveau du bourrelet. Chaque portion est adjointe d'une couche de fils disposée radialement, chaque couche étant disposée radialement extérieurement contre chacune des portions de carcasse. La portion de carcasse radialement extérieure et la couche de fils radialement à l'intérieur sont séparées par un insert de type élastomère à dureté élevée prévu dans le bourrelet. Cet insert garnit axialement la portion centrale du bourrelet et remonte radialement vers l'extérieur et axialement vers l'intérieur, au-delà de la limite radiale de présence des fils métalliques.

Les deux exemples de solutions du document EP 0 922 592 comportent plusieurs inconvénients. Ainsi, l'arrimage de la carcasse proposé dans ce document nécessite la présence d'un retournement axialement vers l'extérieur de la portion d'extrémité de la carcasse. D'autre part, les couches de fils superposées sont disposées radialement près du siège du bourrelet, en bonne partie à une position radiale plus près de l'axe de rotation que la portion haute du rebord sur lequel le bourrelet appuie. A moins d'utiliser des fils fortement extensibles, le montage/démontage du pneumatique est difficile à exécuter, dû à la position radiale défavorable des fils. On remarque également que les piles sont orientées de façon sensiblement parallèle au profil du siège contre lequel le bourrelet appuie. Selon la seconde solution, la carcasse se subdivise en deux portions et un insert à dureté élevé est nécessaire pour séparer d'une part les couches de fils et d'autre part les deux portions de carcasse. L'ancrage de la carcasse n'est cependant pas réalisé dans l'insert. La forme de l'insert décrit est limitative.

Le document WO 01/39999, considéré comme étant l'état de la technique le plus proche, décrit un pneumatique à mobilité étendue dont chacun des bourrelets comporte un siège inversé, une zone d'ancrage, une zone d'appui et une zone de transition. Chacune des zones prises isolément de même que l'ensemble des zones forment en quelque sorte un bourrelet interne susceptible d'effectuer des mouvements relatifs, comme par exemple de type angulaire ou en rotation, par rapport à une autre zone, ou par rapport à un centre de pression CP virtuel, ou par rapport au siège de la jante, etc.

De préférence, ladite zone d'appui est sensiblement allongée. Elle se prolonge par exemple sensiblement le long du siège du bourrelet. Le transfert des efforts lors de la rotation de la zone basse de la portion axialement interne vers la portion axialement externe est ainsi possible, tout en conservant un appui contre au moins une portion du siège du bourrelet. Le transfert des efforts assure un auto-serrage de la pointe du bourrelet contre la jante.

La présente invention propose de pallier les différents inconvénients inhérents aux solutions exposées ci-dessus, et notamment d'optimiser les caractéristiques des zones d'ancrage afin d'agir favorablement au niveau des performances, de l'endurance et des caractéristiques de montage/démontage.

Pour ce faire, elle prévoit un pneumatique pour roue de véhicule, comprenant:

- deux flancs espacés axialement l'un de l'autre, réunis à leurs portions radialement extérieures par une zone de sommet pourvue sur sa portion radialement extérieure d'une bande de roulement circonférentielle ;
- des bourrelets, disposés radialement intérieurement à chacun des flancs, chaque bourrelet comportant un siège et un rebord externe destinés à venir en contact avec une jante adaptée ;

- une structure de renfort s'étendant sensiblement radialement depuis chacun des bourrelets, le long des flancs, vers la zone sommet ;
- au moins un desdits bourrelets comprenant :

- un siège de bourrelet comportant une génératrice dont l'extrémité axialement intérieure est sur un cercle de diamètre supérieur au diamètre du cercle sur lequel se trouve l'extrémité axialement extérieure ;
- une zone d'ancrage de la structure de renfort dans ledit bourrelet, comprenant un arrangement de fils circonférentiels disposés de façon sensiblement adjacente à une portion de la structure de renfort et comprenant au moins deux piles réparties de part et d'autre de la structure de renfort, un mélange de liaison étant disposé entre les fils circonférentiels et la structure de renfort, ledit mélange de liaison de la zone d'ancrage ayant un module d'élasticité à une déformation de 10 % inférieur à 20 MPa et de préférence compris entre 10 et 20 MPa ;
- une zone axialement extérieure disposée dans la zone du bourrelet prévue pour être disposée entre le crochet de jante et la zone d'ancrage, cette zone étant meublée par un mélange caoutchoutique de module d'élasticité à une déformation de 10% sensiblement plus élevé que celui de ladite zone d'ancrage;
- une zone d'appui dudit bourrelet s'étendant sensiblement le long du siège de celui-ci.

De façon très surprenante, la demanderesse a constaté que ce mélange caoutchouteux d'ancrage permettait, en dépit de sa rigidité très inférieure à ce qui était préconisé précédemment, de conserver des caractéristiques en endurance des bourrelets concernés très satisfaisantes.

De manière préférentielle, le mélange caoutchouteux de liaison comporte au moins un élastomère synthétique compris dans le groupe des SBR et des polybutadiènes avec une proportion totale d'élastomère synthétique supérieure à 50 % du poids total d'élastomères.

De préférence, la proportion totale d'élastomère synthétique est comprise entre 55 et 65 % du poids total d'élastomères.

Au-dessus de 65 %, le collant à cru des gommes de liaison devient insuffisante et cela pose des problèmes de confection des bourrelets des pneumatiques, en revanche, en dessous de 55 %, la résistance des mélanges caoutchouteux d'ancrage à une sollicitation de fluage statique à température élevée se dégrade.

Le mélange caoutchouteux d'ancrage comporte, de préférence, un SBR de Tg comprise entre -70 et -25°C avec une proportion en poids supérieure à 20 % du poids total d'élastomères.

Il peut aussi comporter un polybutadiène de Tg comprise entre -110 et -90 °C avec une proportion en poids inférieure à 40 % du poids total d'élastomères.

En effet, la présence de polybutadiène améliore la stabilité thermique du mélange caoutchouteux d'ancrage à haute température toutefois, au-delà de 40 % du poids total d'élastomères, le mélange caoutchouteux d'ancrage devient difficile à réaliser.

Le mélange caoutchouteux d'ancrage supporte avantageusement sans rompre une sollicitation de fluage statique à 150°C sous une contrainte initiale de 2,35 MPa pendant au moins 5 heures.

De préférence, le mélange caoutchouteux d'ancrage a un taux de fluage statique à 150°C sous une contrainte initiale de 2,35 MPa inférieur à $2.10^{-3}$/mn entre 3 et 5 heures de sollicitation.

De préférence, ledit mélange caoutchouteux d'ancrage a un taux de réversion après 10 mn à 197°C inférieur à 10 %.

Ledit mélange caoutchouteux d'ancrage a de préférence un taux de réversion après 10 mn à 197°C inférieur à 5 %.

Le module d'élasticité à une déformation de 10% du mélange caoutchoutique de la zone latérale extérieure est avantageusement supérieur à 30 MPa et de préférence supérieur à 40 MPa.

De manière préférentielle, la zone latérale extérieure coopère avec la zone d'ancrage.

Le mélange caoutchoutique de la zone d'ancrage est avantageusement en contact d'une part avec les fils circonférentiels, et d'autre part avec la structure de renfort de type carcasse.

Le pneumatique selon l'invention comporte avantageusement une zone anti-fluage disposée au niveau du bourrelet, sensiblement le long de la structure de renfort de type carcasse. Le mélange caoutchoutique de la zone anti-fluage a de préférence un module d'élasticité à une déformation de 10% supérieur à celui du mélange de la zone d'ancrage. Par exemple, le mélange caoutchoutique de la zone anti-fluage a un module d'élasticité à une déformation de 10% supérieur à 30 MPa et de préférence supérieur à 40 MPa.

La structure de renfort de type carcasse est de préférence constituée d'un enroulement filaire faisant des aller-retours entre les deux bourrelets en formant dans chacun des bourrelets des boucles. Par ailleurs, l'enroulement filaire est préférablement constitué d'un seul fil.

La zone d'ancrage ne comporte pas de tringle, notamment de tringle de type traditionnel, comme par exemple une tringle multifilaire contre laquelle une nappe carcasse est retournée, de façon à ce que la zone de coopération entre la portion retournée de nappe et la tringle procure le maintien de la nappe carcasse.

La structure de renfort des flancs et du sommet est avantageusement de type carcasse, ses propriétés mécaniques s'apparentant à celles des nappes carcasses de type connu. Par ailleurs, cette structure de renfort est avantageusement configurée sans séparation axiale au niveau du bourrelet. Ainsi, tous les fils de l'agencement circonférentiel occupent de préférence une position axiale sensiblement identique.

La zone d'appui est de préférence sensiblement adjacente au siège de jante.

De manière préférentielle, la zone d'appui est sensiblement constituée d'un mélange de gomme à haut module.

La présence d'une zone de gomme à haut module dans une portion radialement interne par rapport au rebord procure un bon maintien axial et évite que le bourrelet glisse axialement vers l'extérieur.

Selon un mode de fabrication particulièrement avantageux où les différents constituants du pneumatique sont disposés directement sur un noyau central dont la forme confère au pneumatique en cours de fabrication une forme sensiblement similaire à la forme du produit fini, la suppression du retournement (qui existe avec une architecture traditionnelle) permet une simplification avantageuse de la fabrication.

Selon une forme d'exécution avantageuse de l'invention, les bases des piles (les fils radialement les plus près de l'axe de rotation du pneumatique) sont disposées radialement plus à l'extérieur que l'extrémité dudit rebord (portion axialement et radialement la plus à l'extérieur dudit rebord). Les bases des piles sont avantageusement prévues de façon à être disposées radialement extérieurement par rapport au rebord de la jante adaptée au pneumatique. Les opérations de montage/démontage sont alors facilitées.

De manière avantageuse, la structure de renfort de type carcasse s'étend sensiblement radialement depuis chacun des bourrelets, le long des flancs, vers la zone sommet. Ladite structure peut ainsi être unitaire et s'étendre d'un bourrelet à l'autre, ou encore être partagée en deux demi-structures, s'étendant chacune le long d'un seul flanc.

Le nombre de piles ainsi que le nombre d'enroulements ou de spires de chacune des piles est avantageusement établi en fonction des caractéristiques recherchées pour le pneumatique, par exemple sa pression de service. Par exemple, un nombre de piles plus élevé peut être souhaité afin d'augmenter la rigidité au niveau de la zone du bourrelet.

Selon une autre variante avantageuse, le bourrelet intérieur prévu pour être disposé du côté interne de la roue et le bourrelet extérieur prévu pour être installé sur le côté externe de la roue, sont agencés de façon asymétrique. Ainsi par exemple, le nombre de piles ou le nombre de spires de chacune des piles peut être différent, par exemple de manière à ce que le nombre de piles de fils dans le bourrelet côté intérieur soit différent du nombre de piles de fils dans le bourrelet côté extérieur.

Selon un autre aspect, la symétrie concerne les agencements des zones d'ancrage et d'appui. Chacun des bourrelets peut présenter des architectures différentes où par exemple, les formes, les dispositions, les dimensions d'une ou plusieurs des zones peuvent varier. On peut aussi faire varier les matériaux constituants, les caractéristiques mécaniques, comme par exemple la dureté, tout comme on peut faire varier le nombre de zones.

D'autres caractéristiques et avantages de l'invention apparaîtront à la lecture des exemples de réalisation du pneumatique conforme à l'invention, donnés à titre non limitatif et en se référant aux figures 1 à 5 annexées, dans lesquelles:

la figure 1 illustre, en coupe transversale, un pneumatique selon l'invention;

la figure 2 illustre, en coupe transversale agrandie, un bourrelet d'une première variante d'un pneumatique selon l'invention;

la figure 3 illustre, en coupe transversale agrandie, un bourrelet d'une seconde variante d'un pneumatique selon l'invention;

la figure 4 est une vue en perspective, montrant schématiquement la disposition d'une partie des renforts de renforcement ; et

la figure 5 présente des résultats de tests de fluage statique.

L'armature de renforcement ou renforcement des pneumatiques est à l'heure actuelle - et le plus souvent - constituée par empilage d'une ou plusieurs nappes désignées classiquement « nappes de carcasse », «nappes sommet », etc. Cette façon de désigner les armatures de renforcement provient du procédé de fabrication, consistant à réaliser une série de produits semi-finis en forme de nappes, pourvues de renforts filaires souvent longitudinaux, qui sont par la suite assemblées ou empilées afin de confectionner une ébauche de pneumatique. Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'ancrage (généralement une tringle), utilisée pour réaliser l'ancrage ou le maintien de l'armature de carcasse dans la zone des bourrelets du pneumatique. Ainsi, pour ce type de procédé, on effectue un retournement d'une portion de toutes les nappes composant l'armature de carcasse (ou d'une partie seulement) autour d'une tringle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Cependant, il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les fils des différentes structures de renfort sont appliqués directement sur les couches adjacentes de mélanges caoutchoutiques, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappes», ni de «tringle». Les produits de base tels les mélanges caoutchoutiques et les renforts sous forme de fils ou filaments, sont directement appliqués sur le noyau. Ce noyau étant de forme toroïdale, on n'a plus à former l'ébauche pour passer d'un profil plat à un profil sous forme de tore.

Par ailleurs, les pneumatiques décrits dans ce document ne disposent pas du "traditionnel" retournement de nappe carcasse autour d'une tringle. Ce type d'ancrage est remplacé par un agencement dans lequel on dispose de façon adjacente à ladite structure de renfort de flanc des filaments circonférentiels, le tout étant noyé dans un mélange caoutchoutique d'ancrage ou de liaison.

Il existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-finis pour réaliser certains aspects architecturaux (tels que des nappes, tringles, etc), tandis que d'autres sont réalisés à partir de l'application directe de mélanges et/ou de renforts sous forme de filaments.

Dans le présent document, afin de tenir compte des évolutions technologiques récentes tant dans le domaine de la fabrication que pour la conception de produits, les termes classiques tels que «nappes», «tringles», etc, sont avantageusement remplacés par des termes neutres ou indépendants du type de procédé utilisé. Ainsi, le terme «renfort de type carcasse» ou «renfort de flanc» est valable pour désigner les fils de renforts d'une nappe carcasse dans le procédé classique, et les fils correspondants, en général appliqués au niveau des flancs, d'un pneumatique produit selon un procédé sans semi-finis. Le terme «zone d'ancrage» pour sa part, peut désigner tout autant le "traditionnel" retournement de nappe carcasse autour d'une tringle d'un procédé classique, que l'ensemble formé par les filaments circonférentiels, le mélange caoutchoutique et les portions adjacentes de renfort de flanc d'une zone basse réalisée avec un procédé avec application sur un noyau toroïdal.

Dans ce qui suit, on entend par :

- « renfort », aussi bien des mono filaments que des multifilaments, ou des assemblages comme des câbles, des retors ou bien encore n'importe quel type d'assemblage équivalent, et ceci, quels que soient la matière et le traitement de ces renforts, par exemple traitement de surface ou enrobage ou pré encollage pour favoriser l'adhésion sur le caoutchouc ;

- « contact » entre un renfort et un mélange caoutchouteux d'ancrage, le fait que, au moins une partie du contour extérieur du renfort est en contact intime avec le mélange caoutchouteux d'ancrage ; si le renfort comporte un revêtement ou un enrobage, le terme contact veut dire que c'est le contour extérieur de ce revêtement ou de cet enrobage qui est en contact intime avec le mélange caoutchouteux d'ancrage ;

- « axiale », une direction parallèle à l'axe de rotation du pneumatique ; cette direction peut être « axialement intérieure » lorsqu'elle est dirigée vers l'intérieur du pneumatique et « axialement extérieure » lorsqu'elle est dirigée vers l'extérieur du pneumatique ;

- « radiale », une direction passant par l'axe de rotation du pneumatique et normale à celui-ci ; cette direction peut être « radialement intérieure » ou « radialement extérieure » selon qu'elle se dirige vers l'axe de rotation du pneumatique ou vers l'extérieur du pneumatique ;

- « module d'élasticité » d'un mélange caoutchouteux, un module sécant d'extension à 10 % de déformation et à température ambiante, la mesure étant réalisée après un premier cycle d'accommodation jusqu'à 10 % de déformation :

-

$$E_{10} = \frac{F_{10}}{S \times \varepsilon_{10}} \text{ i.e. } E_{10} = \frac{F_{10}(1 + \varepsilon_{10})}{S_0 \times \varepsilon_{10}} \text{ et } E_{10} = \frac{F_{10} \times 1.1}{S_0 \times 0.1} \text{ dans laquelle } \varepsilon_{10} \text{ est égale}$$

à 0.1 ;

avec $E_{10}$ : module d'extension sécant à 10% de déformation ; $F_{10}$: force d'extension à 10% d'extension ; $S_0$: section initiale de l'éprouvette de test ; S : section de l'éprouvette de test à la déformation d'extension ε, dans le cas de matériau en caoutchouc, on sait que : $S = \dfrac{S_0}{1 + \varepsilon}$ ; et $\varepsilon_{10}$: déformation d'extension à 10%.

- « Tg » d'un élastomère, la température de transition vitreuse de celui-ci mesurée par analyse thermique différentielle;

- « test de fluage statique », un test dans lequel on prépare des éprouvettes dont la partie utile a une longueur de 70mm, une largeur de 5 mm et une épaisseur de 2,5 mm (ces éprouvettes sont découpées dans des plaques vulcanisées d'épaisseur 2,5 mm) ; on met en place les éprouvettes dans une étuve à 150°C et on leur accroche immédiatement une masse de 3 kg ; le test s'effectue ainsi avec une contrainte initiale de :

$$\sigma_0 = \frac{Mg}{S_0} = 2,35 MPa$$

avec M : masse appliquée, g : accélération de la pesanteur et $S_0$ section initiale de l'éprouvette de mesure ; on mesure en fonction du temps l'allongement de la partie utile de l'éprouvette ; le « taux de fluage statique » correspond à la variation de déformation dans un temps donné, par exemple entre 3 et 5 heures de test :

$$\tau = \frac{\Delta \varepsilon}{\Delta t}$$

avec : $\Delta \varepsilon = \varepsilon(t_2) - \varepsilon(t_1)$ variation de la déformation mesurée pendant un intervalle de temps $\Delta t = t_2 - t_1$ en minutes (mn) ;

- « test de rhéométrie » : un test de cisaillement alterné à une déformation de $\pm$ 0,2 degrés, une fréquence de 100 cycles/mn, une température de 197°C et une durée de 10 mn ; rhéomètre de la société Monsanto ; le test est effectué sur un disque de mélange cru, on enregistre l'évolution pendant les 10 mn du couple résultant du cisaillement imposé entre les deux faces du disque ; on note particulièrement ici l'évolution du couple après le maximum mesuré, si le couple mesuré reste stable, il n'y a pas de réversion, c'est-à-dire de diminution de la raideur de l'éprouvette, si le couple mesuré diminue, on indique qu'il y a une réversion ; le phénomène de réversion traduit une diminution de la rigidité de l'éprouvette dans les conditions du test ; c'est un test de la stabilité thermique du mélange à haute température ; on note :

$$r = \frac{C_{max} - C_{10}}{C_{max}} \times 100$$

le taux de réversion à l'issue du test ; $C_{max}$ est le couple maximum mesuré et $C_{10}$ est le couple mesuré après 10 mn de test ;

- « un renfort orienté circonférentiellement », un renfort orienté sensiblement parallèlement à la direction circonférentielle du pneumatique, c'est-à-dire faisant avec cette direction un angle ne s'écartant pas de plus de cinq degrés de la direction circonférentielle ; et

- « un renfort orienté radialement », un renfort contenu sensiblement dans un même plan axial ou dans un plan faisant avec un plan axial un angle inférieur ou égal à 10 degrés.

Dans la présente description, le terme "fil" désigne en toute généralité aussi bien des monofilaments que des multifilaments ou des assemblages comme des câbles, des retors ou encore tout type d'assemblage équivalent, et ceci, quels que soient la matière et le traitement de ces fils. Il peut s'agir par exemple de traitements de surface, enrobage ou pré-encollage pour favoriser l'adhérence sur le caoutchouc. L'expression « fil unitaire » désigne un fil composé d'un seul élément, sans assemblage. Le terme « multifilaments » désigne au contraire un assemblage d'au moins deux éléments unitaires pour former un câble, un retors, etc.

D'autre part, on entend par structure radiale, un agencement à 90 degrés, mais aussi, selon l'usage, à un angle proche de 90°.

On sait que, de façon traditionnelle, la ou les nappes de carcasse sont retournées autour d'une tringle. La tringle remplit alors une fonction d'ancrage de la carcasse. Ainsi, notamment, elle supporte la tension se développant dans les fils de carcasse par exemple sous l'effet de la pression de gonflage. L'agencement décrit dans le présent document permet d'assurer une fonction similaire d'ancrage. Il est également connu d'utiliser la tringle de type traditionnel pour assurer une fonction de serrage du bourrelet sur une jante. L'agencement décrit dans le présent document permet également d'assurer un rôle similaire de serrage.

Dans la présente description, on entend par gomme ou mélange de « liaison », le mélange caoutchoutique éventuellement en contact avec les fils de renforcement, adhérant à ceux-ci et susceptible de remplir les interstices entre fils adjacents.

On désigne "flancs" les portions du pneumatique le plus souvent de faible rigidité de flexion situées entre le sommet et les bourrelets. On appelle "mélange flancs" les mélanges caoutchoutiques situés axialement extérieurement relativement aux fils de la structure de renforcement de la carcasse et à leur gomme de liaison. Ces mélanges ont habituellement un bas module d'élasticité.

On appelle "bourrelet" la portion du pneumatique adjacente radialement intérieurement au flanc.

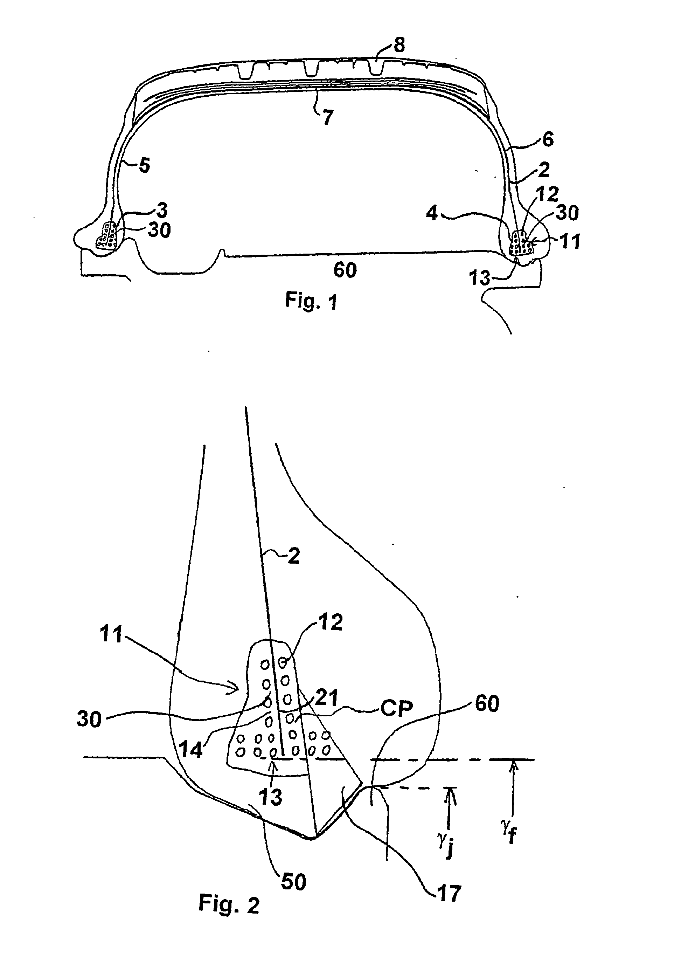

La figure 1 illustre, en coupe transversale, un pneumatique 1 selon l'invention. La figure 2 permet de mieux visualiser certains éléments d'un bourrelet d'un exemple de réalisation de l'invention. Ce pneumatique comprend un premier flanc 5 adjacent à un premier bourrelet 3 correspondant de préférence au bourrelet intérieur. De façon similaire, la portion opposée du pneumatique comprend un second flanc 6 adjacent à un second bourrelet 4. Un sommet 7, sur lequel est prévue une bande de roulement 8, assure la jonction entre les flancs. Le sommet comporte de préférence au moins une ceinture de renfort.

Le pneumatique comporte une structure de renfort de type carcasse 2, pourvue de renforts avantageusement configurés selon un agencement sensiblement radial. Cette structure peut être agencée de façon continue d'un bourrelet à l'autre, en passant par les flancs et le sommet, ou encore, elle peut comporter deux ou plusieurs parties, agencées par exemple le long des flancs, sans couvrir la totalité du sommet.

Les portions d'extrémité 21 de la structure de renfort 2 sont situées dans les bourrelets.

La structure de renfort 2 peut être réalisée par enroulement d'un seul fil faisant des aller-retours entre les deux bourrelets en formant dans chacun des bourrelets des boucles. Ces boucles, enrobées dans le mélange caoutchoutique, contribuent à la liaison mécanique entre la structure de renfort 2 et le bourrelet, notamment les piles 13. Par la présence de boucles entre le parcours "aller" et le "retour" du fil, on voit que le renforcement est de type monofilament. Bien entendu, la carcasse pourrait ne pas être fabriquée de façon continue à partir d'un seul fil, et il pourrait ne pas y avoir de boucles, mais par exemple des extrémités libres.

Le bourrelet comporte par ailleurs une zone d'ancrage 30 sensiblement circonférentielle et comprenant un arrangement de fils circonférentiels disposés de façon sensiblement adjacente à une portion de la structure de renfort et comprend au moins deux piles réparties de part et d'autre de la structure de renfort, un mélange de liaison (ou d'ancrage) étant disposé entre les fils circonférentiels et la structure de renfort.

Dans la zone d'ancrage, au moins un fil 12 d'une des piles 13 est de préférence disposé à proximité immédiate d'une portion 21 de la structure de renfort 2. Les piles peuvent également être agencées de façon à ce qu'une portion 21 soit intercalée entre des piles 13.

Dans la zone d'ancrage, l'espace entre les fils 12 et la structure de renfort 2 est occupé par un mélange caoutchoutique de liaison 14. Le mélange caoutchouteux d'ancrage ou de liaison 14 est disposé de part et d'autre de la structure de renfort entre cette structure et les enroulements circonférentiels 12. Ce mélange caoutchouteux d'ancrage 14 est en contact direct avec au moins une portion du contour d'une part des éléments de renfort de la structure 2 et d'autre part des fils 12 présents dans la zone d'ancrage. Dans l'exemple présenté, le mélange caoutchouteux d'ancrage est en contact avec tous les fils ou renforts disposés dans la zone d'ancrage, et remplit les interstices entre ceux-ci. Ce contact direct entre le mélange caoutchouteux d'ancrage 9 et les éléments de renfort dans la zone d'ancrage est essentiel pour qu'il y ait une bonne coopération mécanique entre les fils circonférentiels et le mélange caoutchouteux d'ancrage pour ancrer solidement les éléments de la structure de renfort 2 dans la zone d'ancrage du bourrelet et reprendre les efforts subis par ces éléments dus notamment à la pression de gonflage du pneumatique. Le mélange caoutchouteux d'ancrage a comme caractéristique mécanique principale une excellente résistance au fluage associée à un module d'élasticité compris entre 10 et 20 MPa

Les fils 12 sont sensiblement inextensibles et peuvent être des câbles métalliques. Les éléments de la structure 2 peuvent être usuellement des renforts textiles de haut module d'élasticité, tels des renforts aramides.

Les arrangements de fils 11 peuvent être agencés et fabriqués différemment. Par exemple, une pile 13 peut avantageusement être constituée d'un seul fil 12, enroulé (sensiblement à zéro degrés) en spirale, de préférence depuis le plus petit diamètre vers le plus grand diamètre. Une pile peut également être constituée de plusieurs fils concentriques posés l'un dans l'autre.

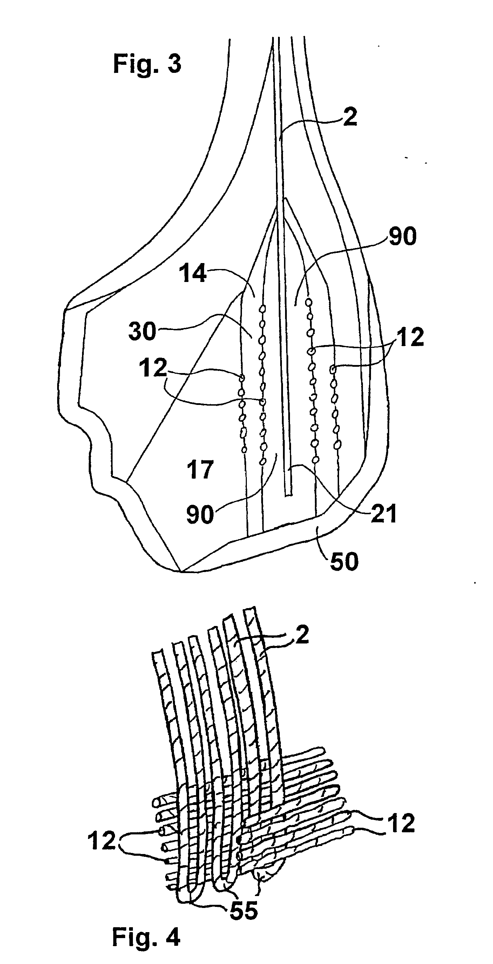

Dans l'exemple de réalisation illustré à la figure 3, le pneumatique comporte une zone anti-fluage 90 disposée au niveau du bourrelet, sensiblement le long de la structure de renfort de type carcasse. Dans l'exemple illustré, cette zone s'étend entre la structure de renfort 2 et la première pile 13 adjacente à la structure 2, de préférence de chaque côté de la structure 2. Le mélange caoutchoutique de la zone anti-fluage a un module d'élasticité à une déformation de 10% supérieur à celui du mélange de la zone d'ancrage, par exemple supérieur à 30 MPa et même de préférence supérieur à 40 MPa. Les caractéristiques anti-fluage du mélange utilisé dans cette zone sont prépondérantes.

Le bourrelet comporte également une zone d'appui 50, disposée sensiblement entre la zone d'ancrage et le siège du bourrelet, sensiblement alignée axialement avec ces zones, ladite zone étant adaptée pour une mise en compression lors du montage du pneumatique sur une jante adaptée. Cette mise en compression contribue à assurer le serrage du pneumatique, en transmettant l'effort de serrage produit par la zone de serrage. Le mélange caoutchoutique de cette zone est sélectionné de façon à procurer une bonne résistance au fluage, afin d'assurer la pérennité des caractéristiques de serrage.

Une zone latérale extérieure 17 est prévue dans la zone du bourrelet prévue pour être disposée entre le rebord ou crochet 60 de jante et la zone d'ancrage. Cette zone est meublée de préférence par un mélange caoutchoutique de sensiblement haut module, par exemple compris entre 10 et 40 MPa.

Cette zone permet d'augmenter la pression de serrage, notamment dans la région du crochet de jante. Grâce à sa déformabilité réduite, elle permet de limiter la tendance du bourrelet à glisser radialement extérieurement au-delà du crochet de jante. Elle contribue par ailleurs d'une part à inhiber toute tendance à générer un moment de rotation, et d'autre part à établir une stabilité dynamique, comme par exemple lors de virages ou de sollicitations latérales importantes.

De manière avantageuse, la zone latérale extérieure 17 est prévue dans la portion axialement externe du bourrelet et s'étend entre la portion adjacente au crochet de jante et la zone d'ancrage. Elle coopère avantageusement avec la zone d'ancrage, ce qui permet une meilleure action mécanique entre ladite zone d'ancrage et la portion du bourrelet adjacente au crochet de jante.

Le pneumatique selon l'invention est particulièrement adapté pour être utilisé sur une jante du type de celle décrite dans le document EP 0 673 324. Une telle jante comporte un siège et de préférence un rehaussement ou rebord situé axialement et radialement vers l'extérieur.

Les bases des piles (les fils radialement les plus près de l'axe de rotation du pneumatique) sont de préférence disposées radialement plus à l'extérieur que l'extrémité dudit rebord (portion axialement et radialement la plus à l'extérieur dudit rebord) tel qu'illustré par exemple à la figure 2. Les bases des piles sont avantageusement prévues de façon à être disposées radialement extérieurement par rapport au rebord de la jante 60 (ou crochet de jante) adaptée au pneumatique. Les opérations de montage/démontage sont alors facilitées. Ainsi, à la figure 2, on constate que $r_f$ (rayon des premiers fils) est supérieur à $r_j$ (rayon du rebord ou crochet de jante). Ce rayon correspond à la distance depuis l'axe de rotation.

Les différents exemples de réalisations décrites et/ou illustrées peuvent avantageusement être réalisées avec des dispositifs du type de ceux décrits dans le document EP 0 580 055.

Ainsi par exemple, il est très avantageux de confectionner le pneumatique sur un noyau central imposant la forme de sa cavité intérieure. On applique sur ce noyau, de préférence dans l'ordre requis par l'architecture finale, tous les constituants du pneumatique, qui sont disposés directement à leur place finale, selon un profil sensiblement final. Dans ce cas, un tel pneumatique peut être moulé et vulcanisé comme exposé dans le document US 4 895 692.

La figure 4 est une vue en perspective précisant les dispositions relatives des différents renforts dans l'un des modes de réalisation des bourrelets de pneumatique de l'invention. Seuls les éléments de renforcement sont représentés dans cette figure. On voit l'alignement circonférentiel de renforts de la structure de renfort de type carcasse. A leurs extrémités radialement inférieures, les portions de fil forment des boucles 55 juxtaposées, situées dans le bourrelet. Ces boucles 55 sont adjacentes et ne se chevauchent pas. De part et d'autre axialement de la structure de renfort de type carcasse, sont représentés les fils 12 adjacents.

En variante beaucoup d'autres modes de réalisation pour notamment la structure de renfort de type carcasse peuvent être utilisés. A titre d'exemple, au lieu d'utiliser un fil continu formant des boucles dans le bourrelet, on peut utiliser des fils individuels posés successivement ou par groupe de quelques-uns formant une bandelette.

Le mélange caoutchouteux d'ancrage ou de liaison selon l'invention a donc comme caractéristiques mécaniques essentielles une rigidité telle que son module d'extension à 10 % de déformation est compris entre 10 et 20 MPa, une excellente résistance au fluage à haute température et une très bonne stabilité à haute température. La rigidité choisie donne aux structures de bourrelet décrites une souplesse suffisante pour permettre de réaliser aisément les montages et démontages des pneumatiques, même ceux de grandes dimensions, sur leurs jantes de service sans dégrader les performances d'endurance ; la résistance au fluage est essentielle pour obtenir un ancrage solide et durable des armatures de carcasse dans les bourrelets et la stabilité thermique à haute température est elle aussi importante en raison des conditions thermiques très sévères que peuvent subir en service certains bourrelets de pneumatiques.

Les expérimentations ont montré que pour obtenir de bons résultats en endurance, on peut utiliser un mélange caoutchouteux d'ancrage contenant un élastomère synthétique SBR de Tg comprise entre -70 et -30°C, utilisé seul ou en couplage avec du polybutadiène. De préférence le polybutadiène a une Tg comprise entre -110 et -90°C. Le ou les élastomères synthétiques sont utilisés en proportion totalisée d'au moins 50% du poids total d'élastomères, le solde est constitué par du caoutchouc naturel. Le mélange caoutchouteux d'ancrage contient en plus des charges de renforcement tel du noir de carbone et un système de vulcanisation appropriés pour obtenir la rigidité désirée. Les fils 12 sont, dans les exemples présentés, des câbles métalliques laitonnés. Il est donc préférable que le mélange caoutchouteux d'ancrage ait un taux de soufre important et contienne des additifs promoteurs de l'adhésion avec le laiton (par exemple des sels métalliques de cobalt ou de nickel). On utilise par exemple un taux de soufre compris entre 5 et 8 % du poids total d'élastomère et un taux de noir de carbone compris entre 60 et 70 % du poids total d'élastomère. Le noir de carbone N347 peut être utilisé préférentiellement.

Quatre mélanges ont été réalisés et testés pour illustrer les caractéristiques des mélange caoutchouteux d'ancrage selon l'invention.

Les composants principaux de la formulation de ces mélanges se trouvent dans le tableau ci-dessous.

| Produits | 1 | 2 | 3 | 4 |
|---|---|---|---|---|
| CN | 100 | 80 | 40 | 40 |
| SBR2300 | 0 | 10 | 30 | 60 |
| BR113 | 0 | 10 | 30 | 0 |
| N347 | 62 | 62 | 62 | 62 |
| Soufre | 7 | 7 | 7 | 7 |

Ces quatre mélanges ont été testés ainsi :

- rigidité : détermination du module d'élasticité à 10 % d'extension et température ambiante,

- fluage : test de fluage statique à 150°C pendant 7 heures comme décrit précédemment, et

- stabilité thermique : test de rhéométrie à 197°C pendant 10 mn tel que décrit précédemment.

| Test | 1 | 2 | 3 | 4 |
|---|---|---|---|---|
| Module d'élasticité | 10,6 | 11,8 | 11,6 | 13,0 |
| Test de fluage | Rupture après 30 mn | Rupture après 60 mn | OK | OK |
| T | ---- | ---- | $1.10^{-3}$/mn | $0,6.10^{-3}$/mn |
| R | 35% | 26% | 1,5% | 7,7% |

Les quatre mélanges ont une rigidité satisfaisante.

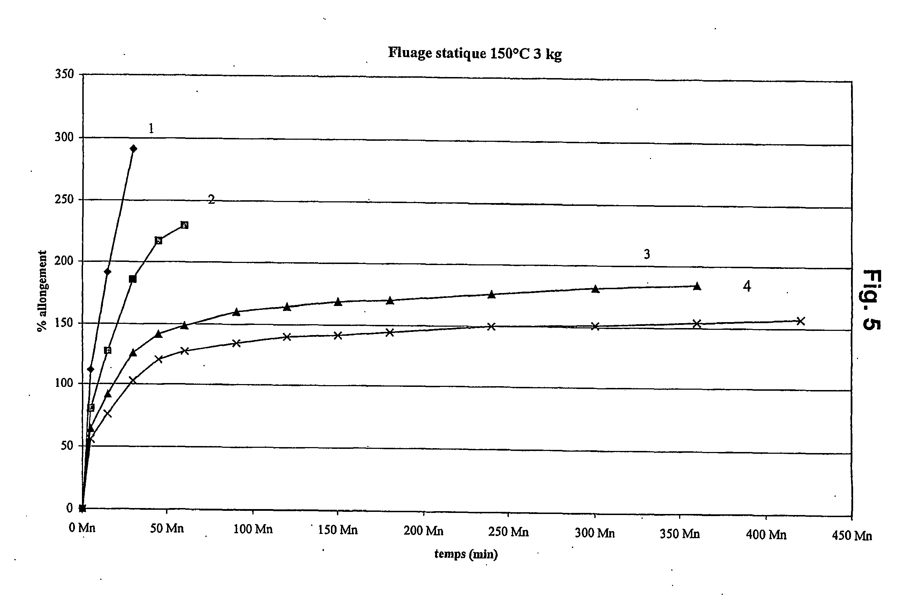

La figure 5 illustre les résultats d'essais de fluage statique pour ces quatre mélanges. Le mélange 1, à base de caoutchouc naturel uniquement, présente une résistance au fluage statique à haute température tout à fait insuffisante. On observe une rupture des éprouvettes après 30 mn de test. Sa stabilité thermique est aussi non satisfaisante puisque le mélange présente un taux de réversion très marqué.

Le mélange 2 a des résultats améliorés relativement au premier mais n'est pas non plus satisfaisant.

Les mélanges 3 et 4 passent avec succès les tests de fluage statique et de rhéométrie. Leur résistance au fluage est tout à fait correcte et leur stabilité thermique à haute température aussi. Le mélange 3, qui comporte trois élastomères, présente un résultat légèrement plus satisfaisant en réversion que le mélange 4.

Des essais pneumatiques ont aussi été réalisés avec des mélanges caoutchouteux d'ancrage de formulations similaires aux mélanges de l'essai. Les pneumatiques ont montré une aptitude correcte pour les opérations de montage et de démontage, mais seuls ceux comportant un mélange caoutchouteux d'ancrage correspondant aux formulations des mélanges 3 et 4 ont montré une résistance en endurance de l'ancrage de la structure de renfort de type carcasse dans les bourrelets suffisante.

A titre non limitatif, il est à noter que la confection des pneumatiques selon l'invention peut avantageusement être réalisée selon un procédé n'impliquant pas ou peu de transformations de formes à l'état cru. Par exemple, on peut assembler l'ébauche du futur pneumatique sur un noyau central imposant la forme de sa cavité intérieure. On applique sur ce noyau, dans l'ordre requis par l'architecture finale, tous les constituants du pneumatique, qui sont disposés directement à leur place finale, sans subir de conformation à aucun moment de la confection. Cette confection peut notamment utiliser les dispositifs décrits dans le brevet EP 0 243 851 pour la pose des renforts du renfort de carcasse et dans le brevet EP 0 264 600 pour la pose des gommes caoutchouteux. Le pneumatique peut alors être moulé et vulcanisé comme exposé dans le brevet US 4 895 692.

**Revendications**

1. Pneumatique pour roue de véhicule, comprenant:

   - deux flancs espacés axialement l'un de l'autre, réunis à leurs portions radialement extérieures par une zone de sommet pourvue sur sa portion radialement extérieure d'une bande de roulement circonférentielle ;
   - des bourrelets, disposés radialement intérieurement à chacun des flancs, chaque bourrelet comportant un siège et un rebord externe destinés à venir en contact avec une jante adaptée ;
   - une structure de renfort s'étendant sensiblement radialement depuis chacun des bourrelets, le long des flancs, vers la zone sommet ;
   - au moins un desdits bourrelets comprenant :
   - un siège de bourrelet comportant une génératrice dont l'extrémité axialement intérieure est sur un cercle de diamètre supérieur au diamètre du cercle sur lequel se trouve l'extrémité axialement extérieure ;
   - une zone d'appui dudit bourrelet s'étendant sensiblement le long du siège de celui-ci.
   - une zone d'ancrage de la structure de renfort dans ledit bourrelet, comprenant un arrangement de fils circonférentiels disposés de façon sensiblement adjacente à une portion de la structure de renfort et comprenant au moins deux piles réparties de part et d'autre de la structure de renfort, un mélange de liaison étant disposé entre les fils circonférentiels et la structure de renfort **caractérisé en ce que** ledit mélange de liaison de la zone d'ancrage ayant un module d'élasticité à une déformation de 10 % inférieur à 20 MPa et de préférence compris entre 10 et 20 MPa ;
   - une zone axialement extérieure disposée dans la zone du bourrelet prévue pour être disposée entre le crochet de jante et la zone d'ancrage, cette zone étant meublée par un mélange caoutchoutique de module d'élasticité à une déformation de 10% sensiblement plus élevé que celui de ladite zone d'ancrage;

2. Pneumatique selon la revendication 1, dans lequel ledit mélange caoutchouteux de liaison comporte au moins un élastomère synthétique compris dans le groupe des SBR et des polybutadiènes avec une proportion totale d'élastomère synthétique supérieure à 50 % du poids total d'élastomères.

3. Pneumatique selon la revendication 2, dans lequel la proportion totale d'élastomère synthétique est comprise entre 55 et 65 %.

4. Pneumatique selon l'une des revendications 1 à 3, dans lequel le mélange caoutchouteux d'ancrage comporte un SBR de Tg comprise entre -70 et -25 °C avec une proportion en poids supérieure à 20 % du poids total d'élastomères.

5. Pneumatique selon l'une des revendications 1 à 4, dans lequel le mélange caoutchouteux d'ancrage comporte un polybutadiène de Tg comprise entre - 110 et -90 °C avec une proportion en poids inférieure à 40 % du poids total d'élastomères.

6. Pneumatique selon l'une des revendications 1 à 5, dans lequel le mélange caoutchouteux d'ancrage supporte sans rompre une sollicitation de fluage statique à 150°C sous une contrainte initiale de 2,35 MPa pendant au moins 5 heures.

7. Pneumatique selon l'une des revendications 1 à 6, dans lequel ledit mélange caoutchouteux d'ancrage a un taux de fluage statique à 150°C sous une contrainte initiale de 2,35 MPa inférieur à $2.10^{-3}$/mn entre 3 et 5 heures de sollicitation.

8. Pneumatique selon l'une des revendications 1 à 7, dans lequel ledit mélange caoutchouteux d'ancrage a un taux de réversion après 10 mn à 197°C inférieur à 10 %.

9. Pneumatique selon la revendication 8, dans lequel ledit mélange caoutchouteux d'ancrage a un taux de réversion après 10 mn à 197°C inférieur à 5 %.

10. Pneumatique pour roue de véhicule selon l'une des revendications précédentes, dans lequel le module d'élasticité à une déformation de 10% du mélange caoutchoutique de la zone latérale extérieure est supérieur à 30 MPa et de préférence supérieur à 40 MPa.

11. Pneumatique pour roue de véhicule selon l'une des revendications précédentes, dans lequel la zone latérale extérieure coopère avec la zone d'ancrage.

12. Pneumatique pour roue de véhicule selon l'une des revendications précédentes, dans lequel le mélange caoutchoutique de la zone d'ancrage est en contact d'une part avec les fils circonférentiels, et d'autre part avec la structure de renfort de type carcasse.

13. Pneumatique pour roue de véhicule selon l'une des revendications précédentes, comportant par ailleurs une zone anti-fluage disposée au niveau du bourrelet, sensiblement le long de la structure de renfort de type carcasse.

14. Pneumatique pour roue de véhicule selon la revendication 13, dans lequel le mélange caoutchoutique de la zone anti-fluage a un module d'élasticité à une déformation de 10% supérieur à celui du mélange de la zone d'ancrage.

15. Pneumatique pour roue de véhicule selon la revendication 13, dans lequel le mélange caoutchoutique de la zone anti-fluage a un module d'élasticité à une déformation de 10% supérieur à 30 MPa et de préférence supérieur à 40 MPa.

**Claims**

1. A tyre for a vehicle wheel, comprising:

   - two sidewalls spaced apart axially from each other, joined at their radially outer portions by a crown zone provided on its radially outer portion with a circumferential tread;
   - beads, arranged radially to the inside of each of the sidewalls, each bead comprising a seat and an outer flange which are intended to come into contact with a suitable rim;
   - a reinforcement structure extending substantially radially from each of the beads, along the sidewalls, towards the crown zone;
   - at least one of said beads comprising:
   - a bead seat comprising a generatrix the axially inner end of which is located on a circle of diameter greater than the diameter of the circle on which the axially outer end is located;
   - a bearing zone for said bead extending substantially along the seat of the latter;
   - an anchoring zone for the reinforcement structure in said bead, comprising an arrangement of circumferential threads arranged substantially adjacent to a portion of the reinforcement structure and comprising at least two stacks distributed on either side of the reinforcement structure, a bonding mix being arranged between the circumferential threads and the reinforcement structure;

   **characterised in that** :

   - said bonding mix of the anchoring zone has a elasticity modulus at a deformation of 10% of less than 20 MPa and preferably between 10 and 20 MPa;
   - an axially outer zone is arranged in the zone of the bead provided to be arranged between the rim hook and the anchoring zone, said zone being furnished by a rubber mix of elasticity modulus at a deformation of 10% substantially higher than that of said anchoring zone.

2. A tyre according to Claim 1, in which said bonding rubber mix comprises at least one synthetic elastomer included in the group of SBRs and polybutadienes with a total proportion of synthetic elastomer greater than 50% of the total weight of elastomers.

3. A tyre according to Claim 2, in which the total proportion of synthetic elastomer is of between 55% and 65%.

4. A tyre according to one of Claims 1 to 3, in which the anchoring rubber mix comprises an SBR of a Tg of between -70 and -25°C with a proportion by weight greater than 20% of the total weight of elastomers.

**5.** A tyre according to one of Claims 1 to 4, in which the anchoring rubber mix comprises a polybutadiene of a Tg of between -110 and -90°C with a proportion by weight less than 40% of the total weight of elastomers.

**6.** A tyre according to one of Claims 1 to 5, in which the anchoring rubber mix withstands without breaking a static creep stress at 150°C under an initial stress of 2.35 MPa for at least 5 hours.

**7.** A tyre according to one of Claims 1 to 6, in which said anchoring rubber mix has an amount of static creep at 150°C under an initial stress of 2.35 MPa of less than $2 \times 10^{-3}$/min between 3 and 5 hours' stress.

**8.** A tyre according to one of Claims 1 to 7, in which said anchoring rubber mix has an amount of reversion after 10 min at 197°C of less than 10%.

**9.** A tyre according to Claim 8, in which said anchoring rubber mix has an amount of reversion after 10 min at 197°C of less than 5%.

**10.** A tyre for a vehicle wheel according to one of the preceding claims, in which the elasticity modulus at a deformation of 10% of the rubber mix of the external lateral zone is greater than 30 MPa and preferably greater than 40 MPa.

**11.** A tyre for a vehicle wheel according to one of the preceding claims, in which the external lateral zone cooperates with the anchoring zone.

**12.** A tyre for a vehicle wheel according to one of the preceding claims, in which the rubber mix of the anchoring zone is in contact on one hand with the circumferential threads, and on the other hand with the carcass-type reinforcement structure.

**13.** A tyre for a vehicle wheel according to one of the preceding claims, furthermore comprising an anti-creep zone arranged at the level of the bead, substantially along the carcass-type reinforcement structure.

**14.** A tyre for a vehicle wheel according to Claim 13, in which the rubber mix of the anti-creep zone has an elasticity modulus at a deformation of 10% greater than that of the mix of the anchoring zone.

**15.** A tyre for a vehicle wheel according to Claim 13, in which the rubber mix of the anti-creep zone has an elasticity modulus at a deformation of 10% greater than 30 MPa and preferably greater than 40 MPa.

**Patentansprüche**

**1.** Luftreifen für ein Fahrzeugrad, der aufweist:

- zwei axial voneinander entfernte Flanken, die an ihren radial äußeren Abschnitten durch eine Scheitelbereichzone vereint werden, die in ihrem radial äußeren Abschnitt mit einer Umfangslauffläche versehen ist;
- Wülste, die radial innerhalb jeder der Flanken angeordnet sind, wobei jeder Wulst einen Sitz und eine äußere Kante aufweist, die dazu bestimmt ist, mit einer geeigneten Felge in Kontakt zu kommen;
- eine Verstärkungsstruktur, die sich im Wesentlichen radial von jedem der Wülste entlang der Flanken zur Scheitelbereichzone erstreckt;
- wobei mindestens einer der Wülste aufweist:

- einen Wulstsitz, der eine Mantellinie aufweist, deren axial inneres Ende sich auf einem Kreis mit einem größeren Durchmesser als der Durchmesser des Kreises befindet, auf dem sich das axial äußere Ende befindet;
- eine Auflagezone des Wulsts, die sich im Wesentlichen entlang von dessen Sitz erstreckt,
- eine Verankerungszone der Verstärkungsstruktur im Wulst, die eine Anordnung von Umfangsfäden aufweist, die im Wesentlichen benachbart zu einem Abschnitt der Verstärkungsstruktur angeordnet sind und mindestens zwei Stapel aufweisen, die auf beide Seiten der Verstärkungsstruktur verteilt sind, wobei eine Verbindungsmischung zwischen den Umfangsfäden und der Verstärkungsstruktur angeordnet ist,

**dadurch gekennzeichnet, dass**

- die Verbindungsmischung der Verankerungszone einen Elastizitätsmodul bei einer Verformung von 10% von weniger als 20 MPa und vorzugsweise zwischen 10 und 20 MPa hat,
- eine axial äußere Zone in der Zone des Wulsts angeordnet ist, die vorgesehen ist, um zwischen der Felgennutpartie und der Verankerungszone angeordnet zu werden, wobei diese Zone mit einer Kautschukmischung mit einem Elastizitätsmodul bei einer Verformung von 10%, der deutlichhöher als derjenige der Verankerungszone ist, gefüllt ist.

2. Luftreifen nach Anspruch 1, bei dem die Verbindungs-Kautschukmischung mindestens ein synthetisches Elastomer aufweist, das in der Gruppe der SBR und der Polybutadiene enthalten ist, mit einem Gesamtanteil an synthetischem Elastomer von mehr als 50% des Gesamtgewichts von Elastomeren.

3. Luftreifen nach Anspruch 2, bei dem der Gesamtanteil von synthetischem Elastomer zwischen 55 und 65% liegt.

4. Luftreifen nach einem der Ansprüche 1 bis 3, bei dem die Verankerungs-Kautschukmischung ein SBR mit einer Tg zwischen -70 und -25°C mit einem Gewichtsanteil von mehr als 20% des Gesamtgewichts von Elastomeren aufweist.

5. Luftreifen nach einem der Ansprüche 1 bis 4, bei dem die Verankerungs-Kautschukmischung ein Polybutadien mit einer Tg zwischen -110 und -90°C mit einem Gewichtsanteil von weniger als 40% des Gesamtgewichts von Elastomeren aufweist.

6. Luftreifen nach einem der Ansprüche 1 bis 5, bei dem die Verankerungs-Kautschukmischung ohne zu brechen eine statische Kriechbeanspruchung bei 150°C unter einer Anfangsspannung von 2,35 MPa während mindestens 5 Stunden aushält.

7. Luftreifen nach einem der Ansprüche 1 bis 6, bei dem die Verankerungs-Kautschukmischung eine statische Kriechrate bei 150°C unter einer Anfangsspannung von 2,35 MPa geringer als $2.10^{-3}$/mn bei zwischen 3 und 5 Stunden Beanspruchung hat.

8. Luftreifen nach einem der Ansprüche 1 bis 7, bei dem die Verankerungs-Kautschukmischung eine Reversionsrate nach 10 mn bei 197°C von weniger als 10% hat.

9. Luftreifen nach Anspruch 8, bei dem die Verankerungs-Kautschukmischung eine Reversionsrate nach 10 mn bei 197°C von weniger als 5% hat.

10. Luftreifen für ein Fahrzeugrad nach einem der vorhergehenden Ansprüche, bei dem der Elastizitätsmodul bei einer Verformung von 10% der Kautschukmischung der äußeren seitlichen Zone höher als 30 MPa und vorzugsweise höher als 40 MPa ist.

11. Luftreifen für ein Fahrzeugrad nach einem der vorhergehenden Ansprüche, bei dem die äußere seitliche Zone mit der Verankerungszone zusammenwirkt.

12. Luftreifen für ein Fahrzeugrad nach einem der vorhergehenden Ansprüche, bei dem die Kautschukmischung der Verankerungszone einerseits mit den Umfangsfäden und andererseits mit der Verstärkungsstruktur vom Typ Karkasse in Kontakt ist.

13. Luftreifen für ein Fahrzeugrad nach einem der vorhergehenden Ansprüche, der außerdem eine Antikriechzone aufweist, die in Höhe des Wulsts im Wesentlichen entlang der Verstärkungsstruktur vom Typ Karkasse angeordnet ist.

14. Luftreifen für ein Fahrzeugrad nach Anspruch 13, bei dem die Kautschukmischung der Antikriechzone einen Elastizitätsmodul bei einer Verformung von 10% höher als derjenige der Mischung der Verankerungszone hat.

15. Luftreifen für ein Fahrzeugrad nach Anspruch 13, bei dem die Kautschukmischung der Antikriechzone einen Elastizitätsmodul bei einer Verformung von 10% höher als 30 MPa und vorzugsweise höher als 40 MPa hat.

**Fig. 1**

**Fig. 2**

**Fig. 3**

**Fig. 4**

## Fig. 5

**EP 1 565 329 B1**

## RÉFÉRENCES CITÉES DANS LA DESCRIPTION

**Documents brevets cités dans la description**

- EP 0582196 A
- EP 0673324 A
- EP 0748287 A
- EP 0922592 A
- WO 0139999 A
- EP 0580055 A
- US 4895692 A
- EP 0243851 A
- EP 0264600 A